# EUROPEAN PATENT APPLICATION

(11) **EP 3 772 765 A1**
(43) Date of publication of application: **10.02.2021**
(21) Application number: 19382688.0
(22) Date of filing: 06.08.2019
(51) Int. Cl.: H01M 4/58, H01M 4/62, H01M 10/0525

(54) **SULFUR CATHODES PROTECTED WITH HYBRID SOLID-ELECTROLYTE INTERFACES FOR HIGH PERFORMANCE LI-S BATTERIES**

(71) Applicant: Fundación Imdea Materiales, 28906 Getafe (Madrid) (ES)
(72) Inventor: ETACHERI, Vinodkumar, E-28901 Getafe, Madrid (ES); DOÑORO PINA, Álvaro, E-28018 Madrid (ES)
(74) Representative: ABG Intellectual Property Law, S.L.

(57) **Abstract**

The invention relates to sulfur hybrid cathodes for rechargeable lithium-sulfur batteries. The cathodes of the invention comprise a carboxylic acid and/or lithium carboxylate at the surface and are capable of forming Li-ion conductive solid-electrolyte interface (SEI) layers. These hybrid surface layers prevent lithium-polysulfide shuttling, and increase coulombic efficiency, rate performance, cycling stability and shelf life of Li-S batteries. Reduced impedance of the cathodes containing SEI-forming carboxylic acids are also identified. Surface chemical studies proved the in-situ formation of hybrid SEI composition on sulfur cathode. The demonstrated strategy of tunable SEI formation can be employed for the development of a wide range of high performance sulfur cathodes for lithium-sulfur batteries.

## Description

### FIELD OF THE INVENTION

The invention relates to the field of lithium-sulfur batteries, and is more particularly concerned with additives for lithium-sulfur battery cathodes which enhance the performance of said batteries.

### BACKGROUND

Since their implementation in the 1990s, rechargeable lithium-ion (Li-ion) batteries have become one of the most convenient options for advanced energy storage technologies. However, their development has reached a point where they can no longer keep up with the ever-increasing demand for energy density of evolving technologies, such as next-generation portable electronic devices and electric vehicles.

For this reason, particular attention has been paid over the last few years to other battery systems which have in fact been known for some time but which were initially outcompeted by Li-ion technology. It was as early as the 1960s that sulfur-based materials started to be considered as an alternative for electrochemical energy storage (EES) systems. Sulfur is an interesting cathode material for Li-S batteries due to its high theoretical capacity (1672 mAh g⁻¹) and theoretical energy density (2600 Wh g⁻¹). Additionally, sulfur has a significantly lower cost compared with the transition-metal compounds used in conventional Li-ion batteries, which added to its natural abundance and non-toxicity, prove that sulfur properties are highly appealing for next-generation secondary lithium batteries.

However, Li-S batteries present drawbacks that hinder their potential application in the energy storage field. Low utilization of sulfur, poor cyclability and reduced coulombic efficiency are caused by the so called "shuttle effect", namely polysulfide dissolution from cathode to electrolyte followed by diffusion to and irreversible reaction with the Li anode, effectively losing electroactive sulfur. Many efforts have been put into overcoming this parasitic phenomenon, such as encapsulating sulfur as part of a composite cathode for example with carbon black, carbon nanospheres, porous carbons, heteroatom-doped carbons, carbon nanotubes, graphene or graphene oxide. Alternatively, strategies for cathode skeleton modification have been also explored and include the insertion of a porous carbon interlayer between the cathode and the separator; the modification of the types and/or amounts of both organic solvents and Li salts involved in the electrolyte system; or the formation of SEI layers or films on the cathode surface. In particular, regarding this latter strategy, most of the approaches relating thereto have focused on altering the electrolyte system, be it the electrolyte itself, or the solvent or additives used therewith, in order to achieve SEI formation. For instance, Aurbach *et al.* reported the formation of a passivation layer on the cathode surface employing a LiFSI-based ionic liquid; Yushin *et al.* described the use of fluoroethylene carbonate with similar purposes; Yushin *et al.* also reported the use of lithium bromide as an additive in a highly concentrated LiTFSI electrolyte based on 1,2-dimethoxyethane solvent.

The present inventors have now demonstrated that SEI behaviour, and with it Li-S battery performance, can be improved through modification not of the electrolyte system, but of the cathode composition.

### BRIEF DESCRIPTION OF THE INVENTION

In particular, the present inventors have surprisingly found that the use of a carboxylic acid as Li-S battery cathode additive provides for superior SEI and thus battery performance. In particular, the inventors have found that, in such a cathode, carboxylic acid groups at the surface thereof are capable of reacting with lithium from the electrolyte system to form lithium carboxylate groups and with it a lithium-carboxylate-containing SEI is also formed at the surface of the cathode. It has been found that such a SEI layer is capable of effectively mitigating the shuttle effect and providing a number of unexpected improvements such as in specific capacities, long-term cycling capacity retention and efficiency, or self-discharge.

Thus, in a first aspect, the present invention refers to a cathode for a lithium-sulfur electrochemical cell, wherein the cathode comprises a carboxylic acid at the surface of the cathode.

Similarly, in a second aspect, the invention refers to a cathode for a lithium-sulfur electrochemical cell, wherein the cathode comprises a lithium carboxylate at the surface of the cathode.

In additional aspects, the invention is directed to a method for preparing the cathode of the first or second aspect of the invention.

The invention also provides, in further aspects, an electrochemical cell or a battery comprising the cathode of the first or second aspect of the invention.

Other aspects relate to uses of the cathode of the first or second aspect of the invention, or of the electrochemical cell or battery comprising said cathode, for storing energy; or to a vehicle, an electronic device or an electrical grid comprising the cathode of the first or second aspect of the invention, or the electrochemical cell or battery comprising said cathode.

### BRIEF DESCRIPTION OF THE DRAWINGS

Figure 1 shows cyclic voltammograms of corresponding cathodes without citric acid (top) and with 5% wt. citric acid additive (bottom).
Figure 2 illustrates galvanostatic rate performances of corresponding sulfur cathodes without citric acid and with 5% wt. citric acid at different current densities.
Figure 3 depicts galvanostatic cycling performance and coulombic efficiencies of sulfur cathodes without citric acid and with 5% wt. citric acid at a rate of 200 mA g⁻¹ with a preliminary discharge-charge stage of one cycle at 20 mA g⁻¹.
Figure 4 shows EIS spectra after different cycles in LiNO₃/LiTFSI electrolyte for corresponding sulfur cathodes without citric acid and with 5% wt. citric acid.
Figure 5 provides EIS spectra after different days of storage at room temperature in LiNO₃/LiTFSI electrolyte for corresponding sulfur cathodes without citric acid and with 5% wt. citric acid.
Figure 6 illustrates OCV changes of sulfur cathodes without citric acid and with 5% wt. citric acid over 100 days of storage at room temperature in LiNO₃/LiTFSI electrolyte.
Figure 7 depicts FT-IR spectra for: lithium citrate (LiCit); no citric acid cathode (pristine); CA cathode prior to cycling (CA); and CA cathode after 10 cycles with LiNO₃/LiTFSI electrolyte (10 cycles).

### DETAILED DESCRIPTION OF THE INVENTION

The present invention refers to a cathode for a lithium-sulfur electrochemical cell, wherein the cathode comprises a carboxylic acid at the surface of the cathode.

In the context of the present invention, a carboxylic acid is any compound comprising a carboxylic acid functional group, i.e. a group of formula --C(=O)OH. In particular, it is this carboxylic acid group which is at the surface of the cathode of the invention. Therefore, the whole of the carboxylic acid compound might not be at the surface of the cathode, so long as its carboxylic acid group is.

In particular, the cathode comprises the carboxylic acid group at the surface of the cathode to be exposed to electrolyte in the electrochemical cell or battery. In an embodiment, the carboxylic acid group is located only at the surface of the cathode to be exposed to electrolyte in the electrochemical cell or battery.

In the context of the present invention, the carboxylic acid group also includes the deprotonated conjugate base thereof, namely the carboxylate group of formula - C(=O)O⁻.

In an embodiment, the carboxylic acid is a vinylogous carboxylic acid, i.e. it comprises one or more enol functional groups in conjugation with one or more carbonyl functional groups, such as in ascorbic acid. The vinylogous carboxylic acid may or may not comprise a standard carboxylic acid (-C(=O)OH) or carboxylate (-C(=O)O⁻) group. The vinylogous carboxylic acids of the present invention further include compounds where the aforementioned conjugation is obtained through one or more resonance forms of an aromatic compound, such as in salicylic acid. In the context of the present invention, the vinylogous carboxylic acid group also includes the deprotonated conjugate base thereof wherein the enol is present in its enolate form.

The present inventors have found that the invention is workable across a wide range of sizes of the carboxylic acid. The present invention is workable when employing small carboxylic acids such as oxalic acid, or large carboxylic acids such as polyacrylic acid.

In a particular embodiment, the carboxylic acid is a C₁-C₂₀ carboxylic acid, i.e. a carboxylic acid comprising from 1 to 20 carbon atoms. More particularly, the carboxylic acid is a C₁-C₁₂ carboxylic acid.

The carboxylic acid may further comprise heteroatoms in addition to the oxygen atoms of the carboxylic acid group. Preferably, the heteroatoms comprised in the carboxylic acid are oxygen, nitrogen or sulfur atoms, more preferably they are oxygen or nitrogen atoms. The number of heteroatoms in addition to the oxygen atoms of the carboxylic acid group may be from 1 to 10, such as from 1 to 5. Examples of such carboxylic acids are citric acid, ascorbic acid or ethylenediamine tetraacetic acid (EDTA).

In a different embodiment, the carboxylic acid comprises no heteroatoms in addition to the oxygen atoms of the carboxylic acid group. Examples of such carboxylic acids are oxalic acid, polyacrylic acid or terephthalic acid.It has similarly been found that there is no limitation in terms of the number of carboxylic acid functional groups present in the carboxylic acid. The carboxylic acid may be a mono-, di-, tri-, tetra- or poly-carboxylic acid, i.e. a compound comprising, respectively, one, two, three, four, or more than four carboxylic acid groups. In a preferred embodiment, the carboxylic acid is a di- or tricarboxylic acid.

Non-limiting examples of monocarboxylic acids are lactic acid, glycolic acid, mandelic acid, palmitic acid, stearic acid, benzoic acid, ascorbic acid and salicylic acid. A preferred monocarboxylic acid is ascorbic acid.

Non-limiting examples of dicarboxylic acids are oxalic acid, malonic acid, succinic acid, glutaric acid, suberic acid, azelaic acid, sebacic acid, phthalic acid, adipic acid, aspartic acid, citraconic acid, fumaric acid, glutaric acid, itaconic acid, maleic acid, malic acid, mesaconic acid, oxalic acid, sebacic acid, succinic acid, tartaric acid, pimelic acid, tartronic acid, glutamic acid, terephthalic acid and traumatic acid. Preferred dicarboxylic acids are oxalic acid or terephthalic acid. In a particular embodiment, the dicarboxylic acid is oxalic acid. In another particular embodiment, the dicarboxylic acid is terephthalic acid.

Non-limiting examples of tricarboxylic acids are citric acid, oxalosuccinic acid, butane tricarboxylic acid, citric acid, isocitric acid, aconitic acid, propane-tricarboxylic acid, trimesic acid, trimellitic acid and benzenetricarboxylic acid. A preferred tricarboxylic acid is citric acid.

Non-limiting examples of tetracarboxylic acids are butane tetracarboxylic acid, pyromellitic acid, or EDTA. A preferred tetracarboxylic acid is EDTA.

Non-limiting examples of polycarboxylic acids are poly(carboxylic acid) polymers, which comprise repeating units of at least one unit comprising at least one carboxylic acid or carboxylate group. The sum of units comprising carboxylic acid or carboxylate groups is preferably present in an amount of at least 20% by weight with respect to the total weight of the polymer (as measured by FTIR such as by following the methods of Stuart, B., Infrared Spectroscopy: Fundamentals and Applications, 2004, JohnWiley & Sons, Ltd., Chapter 3.7 and 3.8), or the poly(carboxylic acid) polymer consists of said repeating units. Non-limiting examples of the poly(carboxylic acid) polymer are those comprising or consisting of repeating alkenoic acid units, i.e. units comprising a carboxylic acid or carboxylate group and an alkene group, such as units of acrylic acid, alkyl acrylic acid, itaconic acid, mesaconic acid or citraconic acid. A preferred polycarboxylic acid is polyacrylic acid.

In a preferred embodiment, the carboxylic acid is citric acid, oxalic acid, EDTA, polyacrylic acid, terephthalic acid or ascorbic acid, all of which are readily commercially available such as from Sigma Aldrich. A particularly preferred carboxylic acid is citric acid.

Any of the above described carboxylic acids may unsubstituted or may be substituted at one or more available positions by one or more groups such as -OR', =O, -SR', -SOR', -SO₂R', -NO₂, -NHR', -N(R')₂, =N-R', -NHCOR', -N(COR')₂, -NHSO₂R', -CN, halogen, -COR', -COOR', -OCOR', -CONHR', -CON(R')₂ wherein each of the R' groups is independently selected from the group consisting of hydrogen, C₁-C₆ alkyl, C₂-C₆ alkenyl, C₂-C₆ alkynyl, OH, NO₂, NH₂, SH, CN or halogen.

In an embodiment, the amount of carboxylic acid present in the cathode is between 1 and 25% by weight with respect to the total weight of the cathode. More particularly, this amount is between 2 and 10%, and even more particularly, it is between 4 and 8%. In a particular embodiment, it is about 5%.

The preferred amount of carboxylic acid to be employed will generally vary from one carboxylic acid to another, and will depend on factors such as the electrolyte system or cycling/precycling conditions to be used. The present inventors have surprisingly found that having a carboxylic acid at the cathode surface can lead to SEIs and batteries which are capable of mitigating the shuttle effect whilst at the same time not stopping electrolytes from accessing the cathode's structure and reacting with sulfur compounds comprised therein after SEI formation. Guided by this herein unveiled knowledge, it is a routine matter for the skilled person to identify the exact amounts of carboxylic acid at which this behaviour is observed, or at which electrochemical cell or battery performance is optimal, for instance determining the best balance between shuttle effect mitigation and actual amount of electrochemically active material in the cathode.

For instance, the present inventors have identified that an amount of between 2 and 8% of citric acid by weight with respect to the total weight of the cathode is preferred; and that if this amount is between 4 and 6%, in particular is about 5%, optimal electrochemical performance is achieved.

In order to mitigate polysulfide shuttle effect and enhance electrochemical performance, at least part of the carboxylic acid groups at the surface of the cathode are preferably lithiated (electrochemically induced COOLi formation with Li-containing electrolyte solution). This can be also achieved through cathode preparation with lithium carboxylate at the surface.

This provides the cathode of the second aspect of the invention, namely a cathode for a lithium-sulfur electrochemical cell, wherein the cathode comprises a lithium carboxylate at the surface of the cathode.

The lithium carboxylate can be any of the carboxylic acids described above, wherein the proton in any or all of the -C(=O)OH groups is replaced by a lithium cation. Preferences described above for the carboxylic acids likewise apply to the corresponding lithium carboxylate. Similarly, the preferred amounts of a particular lithium carboxylate in the cathode can be readily identified by the person skilled in the art having learnt the teachings unveiled herein.

In a particularly preferred embodiment, the lithium carboxylate is a derivative of citric acid wherein lithium carboxylate groups replace one, two or three carboxylic acid groups in citric acid. In a particular embodiment, a lithium carboxylate group replaces one of the carboxylic acid groups. In another particular embodiment, a lithium carboxylate group replaces two each of the carboxylic acid groups. In another particular embodiment, the three carboxylic acid groups are each replaced by a lithium carboxylate group.

In an embodiment, the invention refers to a cathode for a lithium-sulfur electrochemical cell, wherein the cathode comprises a carboxylic acid and a lithium carboxylate at the surface of the cathode. These two groups may be found within the same molecule, or separately at different molecules of the same or a different compound.

Preferably, the ratio of lithium carboxylate groups to carboxylic acid groups at the surface of the cathode is at least 1 to 3, more preferably at least 1 to 1, even more preferably at least 3 to 1. In a particular embodiment, the cathode does not comprise a carboxylic acid at its surface, but does comprise a lithium carboxylate at its surface.

A lithium-sulfur electrochemical cell generally comprises a lithium or a lithium-based alloy anode; an electrolyte capable of dissolving and transporting lithium ions from the anode to the cathode; and a cathode comprising a sulfur containing species which can reversibly react with the lithium ions by forming lithium sulfides, from higher-order species containing more sulfur (generally termed polysulfides) to lower-order species containing less sulfur, for example, Li₂S. Thus, a cathode for a lithium-sulfur electrochemical cell implicitly comprises said sulfur species as active material.

The cathode active material sulfur species comprises sulfur in any form which allows the reversible reduction of sulfur atoms comprised in said species upon reaction with lithium ions from the anode. In an embodiment, the sulfur species is selected from elemental sulfur, Li₂Sₙ (n≥1), an organosulfur compound, or a carbon-sulfur polymer.

Organosulfur active materials are well-known in the field of the invention and include dithioacetals, dithioketals, trithio-orthocarbonates, thiosulfonates [-S(O)₂-S-], thiosulfinates [-S(O)-S-], thiocarboxylates [-C(O)-S-], dithiocarboxylates [-C(S)-S-], thiophosphates, thiophosphonates, monothiocarbonates, dithiocarbonates, trithiocarbonates, and organosulfur polymers such as polyether-polysulfides, vulcanized polyacetylene, carbyne polysulfide, sulfurized polyvinylchloride, sulfurized polyacrylonitrile, or aromatic polysulfides.

Carbon-sulfur polymers are also known in the art as active materials. Examples of carbon-sulfur polymers are those of formula (C₂Sₓ)ₙ, wherein x=2.5 to 10 and n≥2.

In a preferred embodiment, the sulfur species is selected from elemental sulfur and Li₂Sₙ (n≥1), preferably from elemental sulfur and Li₂S, and more preferably the sulfur species is elemental sulfur.

The amount of the sulfur species in the cathode should be as high as possible. As the amount of the sulfur species increases, the capacity of the cathode increases. However, the amount of sulfur species in the cathode should not be so high that the amount of other components in the cathode, notably of the carboxylic acid, is reduced to a point their function is neglected or lost. As already mentioned, the skilled person knows how to strike an appropriate balance between the amount of sulfur species and the amount of said other components in the cathode, notably of the carboxylic acid.

The carboxylic acid of the present invention is preferably one which does not react with, such as form a covalent bond to, the sulfur species of the cathode.

In a particular embodiment, the cathode does not comprise silicon or any silicon-comprising compound, such as a composite, or an alloy thereof. More particularly, the cathode does not comprise silicon nanoparticles or any silicon-nanoparticle-comprising compound, such as a composite, or an alloy thereof. A silicon nanoparticle is understood to be a particle of 100 nm or less, such as of 50 nm or less.

In an embodiment, the amount of sulfur species present in the cathode is between 20 and 90% by weight with respect to the total weight of the cathode. More particularly, this amount is between 35 and 75%, and even more particularly between 45 and 55%. In further embodiments, each of these weight percentages is combined with each of the weight percentages indicated above for the carboxylic acid.

The cathodes of the present invention may further comprise a filler, which hosts the sulfur species, this mixture generally being defined as a composite. Non-limiting examples of fillers include carbon materials such as carbon black, carbon nanotubes (e.g. single-walled or multi-walled), carbon nanofibers, graphene, graphite, porous carbon (e.g. microporous, mesoporous or nanoporous) or activated carbon; metal oxides, such as Mg_{0.6}Ni_{0.4}O, SiO₂, TiO₂, Ti₄O₇, MnO₂, MgO, Co₃O₄, ZnO or SnO₂; metal sulfides, such as TiS₂, CoS₂, MoS₂; metal nitrides such as TiN, VN; metal carbides such as Ti₂C, WC; metal phosphides such as CoP; polymers such as polypyrroles, polyanilines, polyphenylenes, polythiophenes or polyacetylenes; or combinations thereof.

In a preferred embodiment, the filler is selected from carbon materials such as those mentioned above. Carbon fillers generally enhance the conductivity of the cathode and depending on their host matrix architecture can physically restrict the migration of polysulfide species away from the cathode. More preferably, the filler is carbon black.

The term "carbon black" [C.A.S. NO. 1333-86-4] refers to colloidal carbon particles produced by the incomplete combustion or thermal decomposition of gaseous or liquid hydrocarbons such as heavy petroleum distillates and residual oils, coal-tar products, natural gas or acetylene. Its physical appearance is that of a black, finely divided pellet or powder. Carbon black is chemically and physically distinct from soot and black carbon, as it contains greater than 90%, preferably greater than 97%, elemental carbon. Well-known types of carbon black include acetylene black, ketjenblack, activated carbon, channel black, furnace black, lamp black and thermal black.

In an embodiment, the amount of filler, preferably carbon material filler, more preferably carbon black, present in the cathode is between 1 and 70% by weight with respect to the total weight of the cathode. More particularly, this amount is between 20 and 60%, and even more particularly between 35 and 45%. In further embodiments, each of these weight percentages is combined with each of the weight percentages indicated above for the sulfur species and/or for the carboxylic acid.

In a preferred embodiment, the sulfur species-filler composite is an elemental sulfur-carbon black composite. This composite preferably comprises between 25 and 95%, preferably between 45 and 65%, elemental sulfur by weight with respect to the total composite weight, the remainder of the composite (up to 100%) being the carbon black.

In an embodiment, the cathode additionally comprises a binder. The binder functions to hold the active material together in the cathode, to ensure good electrical contact between the active material and any filler, as well as to link the active materials of the cathode with the current collector in the electrochemical cell.

The choice of binder material may vary widely so long as it is inert with respect to the other materials in the cathode. Non-limiting examples of suitable binders include polytetrafluoroethylenes, polyvinylidene fluorides, ethylene-propylene-diene rubbers, polyethylene oxides, UV curable acrylates, UV curable methacrylates, and heat curable divinyl ethers.

In a preferred embodiment, the binder is polyvinylidene fluoride.

In an embodiment, the amount of binder, preferably polyvinylidene fluoride present in the cathode is between 1 and 30% by weight with respect to the total weight of the cathode. More particularly, this amount is between 4 and 20%, and even more particularly between 5 and 10%. In further embodiments, each of these weight percentages is combined with each of the weight percentages indicated above for the sulfur species and/or for the carboxylic acid and/or the filler.

In a particularly preferred embodiment, the cathode comprises citric acid (as carboxylic acid); elemental sulfur (as sulfur species); carbon black (as filler); and polyvinylidene fluoride (as binder).

In the context of the present invention, whenever the total weight of the cathode is referred to, this does not comprise any current collector.

The present invention is directed in another aspect to methods for preparing the cathodes of the invention.

These methods typically comprise the steps of:
a) mixing the sulfur species and the carboxylic acid and/or lithium carboxylate, and optionally the filler, and optionally the binder, and optionally a solvent, to obtain a mixture;
b) if solvent is employed in step a), evaporating the solvent, and optionally drying the evaporated mixture.

Preferably, the filler is mixed in in step a).

In an embodiment, the process comprises an intermediate step of coating the mixture of step A on a current collector, which may be any of those described herein. Step b) is then performed on the coated current collector.

In a first preferred embodiment, step a) comprises:
a1-1) Mixing the sulfur species and the filler; and then
a2-1) Adding the carboxylic acid and/or lithium carboxylate, and optionally the binder, and optionally a solvent.

Preferably, this embodiment comprises an intermediate step wherein the mixture of step a1-1) is heated to a temperature of at least the melting point of the sulfur-species to under the decomposition temperature of the sulfur species or filler. The melting enables melt-diffusion of the components, which may be carried out for any desired length of time, such as during 1 hour to 1 day, e.g. for 12 h, and which may be carried out under an inert atmosphere such as under an argon atmosphere and/or in a sealed vessel. The mixture is then cooled to under the decomposition temperature of any of the components of step a2-1), and the components of step a2-1) are then added.

In a particular and preferred example, the sulfur species is elemental sulfur, the filler is carbon black and the carboxylic acid is citric acid. As citric acid is not present in the mixture of step a1-1) its relatively low decomposition temperature (from 175 °C) is not limiting on the temperature at which heating takes place. In a particular embodiment, the heating temperature is about 200°C. However, after the melt-diffusion is completed, care should be taken that the formed sulfur-carbon black composite (mixture) is cooled to under the decomposition temperature of citric acid before citric acid is added.

In a second preferred embodiment, step a) comprises:
a1-2) Mixing the sulfur species, the filler and the carboxylic acid and/or lithium carboxylate; and then
a2-2) Adding optionally the binder, and optionally a solvent.

Preferably, this embodiment comprises an intermediate step wherein the mixture of step a1-2) is heated to a temperature of from at least the melting point of the sulfur-species to under the decomposition temperature of the sulfur species, filler or carboxylic acid. The melting enables melt-diffusion of the components, which may be carried out for any desired length of time, such as during 1 hour to 1 day, e.g. for 12 h, and which may be carried out under an inert atmosphere such as under an argon atmosphere and/or in a sealed vessel. The mixture is then cooled to under the decomposition temperature of any of the components of step a2-2), and the components of step a2-2) are then added.

In a particular and preferred example, the sulfur species is elemental sulfur, the filler is carbon black and the carboxylic acid is citric acid. As citric acid is present in the mixture of step a1-1), the heating temperature should preferably be under the decomposition temperature of citric acid to ensure citric acid does not decompose. In a particular embodiment, the heating temperature is about 155 °C. As citric acid is present during melt-diffusion, superior mixing with the other materials is achieved and the distribution of citric acid in the resulting cathode is typically more uniform compared to when citric acid is not present during melt-diffusion.

In a preferred embodiment, in step a) or a1-1) or a1-2), the mixing is carried out by milling such as by high-energy ball milling, pin milling, roller milling, or jet milling, the purpose of the milling being to provide a more homogeneous mixture of carbon and sulfur with a finer particle size as compared to that obtained by simple mixing. Preferably, the mixing is carried out by high-energy ball milling, which refers to a ball milling process where a powder mixture placed in a ball mill is subjected to high-energy collision from the balls. Different variants of high-energy ball milling are known in the art, and include rotation ball milling, planetary ball milling, vibration ball milling or attrition ball milling.

If the cathode is not in the desired shape after step b), it may be shaped such as by compressing, cutting, shearing or punching or a combination of these techniques to impart the desired shape.

In order to prepare the cathode of the second aspect of the invention, i.e. the cathode comprising lithium carboxylate, several methods are possible.

In an embodiment, the methods of preparation described above are employed, wherein lithium carboxylate is directly mixed in from the outset, i.e. mixed in during step a).

In a different embodiment, carboxylic acid is mixed in during the above described methods of preparation, and the resulting cathode is then lithiated before assembling the cathode into an electrochemical cell (*ex-situ* lithiation). Methods of lithiation are well known in the art and include reaction of the carboxylic acid with one equivalent of an organolithium compound.

In a different and preferred embodiment, the carboxylic acid is mixed in during the above-described methods of preparation, and the resulting cathode is assembled into the electrochemical cell of the invention. As the cathode is exposed to the electrolyte solution, which comprises at least one lithium salt as described herein, part of or at least part of the carboxylic acids are converted into lithium carboxylates (*in-situ* lithiation). This process can occur passively or can be electrochemically induced.

The electrochemically induced lithiation of the carboxylic acids is achieved by cycling (single or multiple discharge-charge cycles) the electrochemical cell of the present invention comprising carboxylic acid at the surface of the cathode and at least one lithium salt as described below in the electrolyte solution. Any technically sensible cycling current densities may be employed, such as from 1 to 5000 mA g⁻¹, for instance at about 200 mA g⁻¹.

However, it has been found that initial slower cycling (also herein referred to as pre-cycling) provides superior results in terms of specific capacities achieved by the electrochemical cell and long-term cycling stability. Therefore, in a preferred embodiment, the electrochemical cell is initially cycled at between 1 and 100 mA g⁻¹, preferably between 5 and 50 mA g⁻¹, more preferably between 10 and 30 mA g⁻¹, and in particular at about 20 mA g⁻¹. In particular, the electrochemical cell may initially be cycled more than once, such as from one to five times, but preferably less than thrice, e.g. once, at said current densities.

Each cycle may be carried out at a different current density. For instance, ramping may be employed, according to which increasing current density pre-cycles are carried out.

In a particular and preferred embodiment, an initial pre-cycle at between 1 and 40 mA g⁻¹, preferably at between 10 and 30 mA g⁻¹, in particular at about 20 mA g⁻¹, is performed. This initial pre-cycle is preferably carried out starting from a voltage high enough (such as 3.8 - 3.0 V) to avoid polysulfide formation and interference during the Li-carboxylate SEI formation, down to a lower voltage (such as 1.0-2.0 V), and then back up to a standard Li-S battery cycling voltage (such as 2.5-3.0 V). This pre-cycle is then optionally followed by other pre-cycling cycles as described above.

These initial cycles may be carried out at different temperatures, such as from 10 to 60 °C to further enhance the properties of the SEI.

It is understood that the present invention refers to cathodes and electrochemical cells comprising cathodes obtainable by any of the methods described herein.

The term SEI stands for solid electrolyte interphase and refers to a film or layer that is formed on the electrode surface (cathode in this case) upon exposure to electrolyte. Depending on their composition, SEIs may provide permeability to certain ions but not others. The present inventors have surprisingly found that SEI layers formed on the cathode surface of the invention, and which therefore comprise the lithium carboxylate groups present at said surface, allow lithium ions to cross the SEI and therefore access the cathode, whilst at the same time preventing lithium polysulfides leaving the cathode or at least minimising their escape. When employing a method of *in situ* lithiation of carboxylic acid groups, SEI layer formation occurs at the same time as said lithiation (SEIs composed of Li-carboxylates).

Furthermore, it has been unexpectedly found that carboxylic acid groups can also act as polysulfide traps, preventing their diffusion away from the cathode.

In another aspect, the present invention is directed to an electrochemical cell comprising the cathode of the present invention.

More particularly, the electrochemical cell comprises:
- An anode comprising lithium or a lithium alloy as the active anode species;
- An electrolyte; and
- Cathode of the present invention.

The anode comprises or consists of lithium or of a lithium alloy.

Non-limiting examples of alloys suitable as active anode species are alloys of lithium with elements from Groups 1-17 (e.g. Groups 2, 10, 11, 12, 13, 14, and/or 15) of the Periodic Table. Suitable elements from Group 2 of the Periodic Table may include beryllium, magnesium, calcium, strontium, barium, and radium. Suitable elements from Group 10 may include nickel, palladium, or platinum. Suitable elements from Group 11 may include copper, silver, or gold. Suitable elements from Group 12 may include zinc, cadmium, or mercury. Elements from Group 13 that may include boron, aluminium, gallium, indium, or thallium. Elements from Group 14 that may include carbon, silicon, germanium, tin, or lead. Elements from Group 15 that may include nitrogen, phosphorus, or bismuth. Combinations of the above-mentioned elements can also be used. Additionally, in some instances, N, O, C, or other non-metals that may form an alloy with lithium and which may be in the form of a gas (e.g., N₂, O₂, and CO₂) prior to forming an alloy with lithium, may be used. In a preferred embodiment, the lithium alloy is a lithium-tin alloy or a lithium-aluminium alloy.

In a preferred embodiment, the anode is a lithium anode.

The lithium or lithium alloy anode can adopt any suitable metallic shape such as foil, wire, bits or pellets, or the anode may comprise lithium or lithium alloy powder and a binder. Such anodes are readily commercially available, such as from Sigma-Aldrich (Anode Materials category, e.g. product # 444456, 278327, 426490 or 400939).

The electrolyte is disposed between the electrodes, allowing charge to be transferred between the anode and cathode.

In a preferred embodiment, the electrolyte comprises at least one lithium salt. Non-limiting examples of suitable lithium salts are lithium hexafluorophosphate (LiPF₆), lithium chloride (LiCl), lithium bromide (LiBr), lithium iodide (LiI), lithium hexafluoroarsenate (LiAsF₆), lithium perchlorate (LiCIO₄), lithium borofluoride (LiBF₄), lithium trifluoromethanesulphonate (CF₃SO₃Li), lithium nitrate (LiNO₃), lithium bis(fluoromethanesulfonyl)imide (LiFSI) and lithium bis(trifluoromethanesulfonyl)imide (LiTFSI). Preferred lithium salts are LiNO₃ or LiTFSI.

In an embodiment, the electrolyte comprises at least two lithium salts, each preferably selected from the above list of lithium salts. In a preferred embodiment, the electrolyte comprises LiNO₃ and LiTFSI.

In any of these embodiments, the electrolyte comprises at least one inorganic lithium salt. In the context of this invention, an inorganic lithium salt refers to a lithium salt which does not comprise a carbon atom in its anion.

The concentration of lithium salt in the electrolyte is typically from 0.1 to 5M. Where more than one lithium salt is comprised in the electrolyte, these salts may be present in different concentrations. In a particular embodiment, the electrolyte comprises LiNO₃ at a concentration of 0.1 to 0.5M such as about 0.2M; and LiTFSI at a concentration of 0.5 to 2M such as about 1M.

The electrolyte preferably comprises at least one organic solvent.

Suitable organic solvents are tetrahydrofuran, 2-methyltetrahydrofuran, methylpropylpropionate, ethylpropylpropionate, methyl acetate, dimethoxyethane, diglyme, triglyme, tetraglyme, ethylene carbonate, propylene carbonate, 1,3-dioxolane, hexamethyl phosphoamide, pyridine, dimethyl sulfoxide, tributyl phosphate, trimethyl phosphate, *N,N,N,N*-tetraethyl sulfamide and alkyl carbonates such as ethylenecarbonate, dimethylcarbonate, diethylcarbonate, ethylmethylcarbonate, propylene carbonate, or methylpropylcarbonate.

In a preferred embodiment, the organic solvent is selected from 1,3-dioxolane and an alkyl carbonate, more particularly from 1,3-dioxolane and 1, 2-dimethoxyethane.

In another preferred embodiment, the electrolyte comprises at least two organic solvents, which may each be selected from the list of organic solvents provided above. In a preferred particular embodiment, the electrolyte comprises 1,3-dioxolane and an alkyl carbonate, more particularly 1,3-dioxolane and 1,2-dimethoxyethane.

The amount ratio of the solvents may be for example from 5:1 to 1:5, more particularly from 3:1 to 1:3, and even more particularly about 1:1, by volume.

The electrolyte preferably comprises at least one lithium salt and at least one organic solvent. Preferences provided above for the lithium salt and the organic solvent apply equally when they are combined.

In a particularly preferred embodiment, the electrolyte comprises LiNO₃ and LiTFSI (as lithium salts) and 1,3-dioxolane and 1,2-dimethoxyethane (as organic solvents).

Cathodes of the invention and their method of preparation are described hereinabove.

In an embodiment, where the electrochemical cell comprises a liquid electrolyte, as are those described hereinabove, the electrochemical cell further comprises a separator placed between the cathode and the anode such as to prevent direct contact between the electrodes. The separator may be made of any material which is inert towards the components of the system involved in the electrochemical reaction and which allows ions in the system to travel from and to the electrodes of the cell.

Suitable separators include glass fibre or polymeric materials such as polypropylene, nylon or polyethylene. In a particular embodiment, the separator is glass fibre. In an embodiment, the separator is a layer of any of these materials, and in another embodiment, the separator is multi-layered, each layer being independently selected from these materials.

The sides of the separator need not be aligned with the anode or the cathode. For example, the separator may be offset relative to the cathode and/or anode.

In cases where a solid electrolyte is employed, the solid electrolyte itself acts as the separator.

Additionally, the cathode and the anode are typically assembled together with a current collector. Suitable current collectors include substrates such as foil, sheet or mesh formed of a metal or metal alloy, for example aluminium or copper. For instance, the cathode-side current collector may be made of Al, and/or the anode-side current collector may be made of Cu.

In another aspect, the present invention refers to a battery comprising a cathode or an electrochemical cell according to the present invention.

Electrochemical cells of the invention can be assembled together to prepare a battery according to the present invention. The cells may be assembled in parallel or in series, or both. In an embodiment, any, several or each of the cells is connected to a module for monitoring cell performance, e.g. for monitoring cell temperature, voltage, charge status or current. Methods of battery assembly are well-known in the art and are reviewed for instance in Maiser, Review on Electrochemical Storage Materials and Technology, AIP Conf. Proc. 1597, 204-218 (2014).

The present invention is also directed to a vehicle, an electronic device or an electrical grid comprising a cathode, or an electrochemical cell or a battery according to the present invention.

Similarly, the invention is directed to the use of a cathode, or of an electrochemical cell or of a battery according to the present invention, for storing energy, and more particularly for storing energy in a vehicle, an electronic device or an electrical grid.

The vehicle can be an automobile, in particular a heavy automobile such as buses or trucks, a rail vehicle, a marine vehicle, an aircraft or a spacecraft. Preferably, it is an aircraft or a spacecraft.

Preferably, the electronic device is a portable electronic device, such as a laptop, a tablet, a cellular phone, a smart phone or a smart watch.

The invention is further illustrated, but not limited by, the following examples.

### Examples

### Materials

Carbon black (MTI Corporation #EQ-Lib-AB), elemental sulfur (Sigma-Aldrich #414980), lithium citrate (Sigma-Aldrich #213209), citric acid (Sigma-Aldrich #251275), polyvynilidene fluoride (MTI Corporation #EQ-Lib-PVDF), 1-methyl-2-pyrrolidinone (Sigma-Aldrich #443778), 1,3-dioxolane (Sigma-Aldrich #184497), 1,2-Dimethoxyethane (Sigma-Aldrich #259257), lithium bis(trifluoromethanesulfonyl)imide (Sigma-Aldrich #544094), lithium nitrate (Sigma-Aldrich #227986), and Li metal chips (MTI Corporation #EQ-Lib-LiC60). All reagents were used without further purification.

An Empyrean X-ray diffractometer (PANanalytical) fitted with a Cu-Kα radiation was used for recording the X-ray diffraction (XRD) patterns (2*θ* = 10-80°) of the samples. Fourier transform infrared (FT-IR) and attenuated total reflectance infrared (ATR IR) spectra were acquired using a Nicolet iS50 FTIR spectrometre (Thermo Scientific). Sulfur contents were determined by thermogravimetric analysis (TGA) carried out by a TGA Q50 analyzer (TA Instruments) in the temperature range of 25-400°C under N₂-atmosphere and a heating rate of 10°C min⁻¹. Changes in the specific surface area were studied by the multipoint Brunauer Emmett Teller (BET) method. FEI Helios Nano-Lab 600i Dual-Beam was used to record scanning electron microscopy (SEM) images and energy dispersive X-ray spectroscopy (EDS) mapping of the samples. High-resolution transmission electron microscopy (HR-TEM) images were recorded using a FEI-Talos F200X microscope working at an acceleration voltage of 300 kV. Kratos Axis Ultra DLD spectrometer fitted with A1 Kα (1486.6 eV) X-ray source was used for collecting the X-ray photoelectron spectra (XPS) of cobalt-carbon hybrid samples. Neware BTS 4000 multi-channel battery tester system was used to test coin-type cells in galvanostatic mode. A ZIVE SP1 compact electrochemical workstation was used for cyclic voltammetry (CV) and EIS measurements.

### Example 1: Preparation of a cathode according to the invention

A sulfur-carbon black (SCB55) composite was fabricated by high-energy ball milling of a sulfur/carbon (S/C) sample in a ratio of 1.25:1, followed by a melt-diffusion (melt infiltration) stage where sulfur and carbon were heated up to 200° C for 12 h in a sealed vessel under an argon atmosphere.

Sulfur content in the composite was confirmed by XRD, whereas TGA results confirmed a sulfur content of 55 wt.%, whose infiltration within the carbon matrix led to a noticeable reduction of the specific surface area, as it was confirmed by BET analysis. SEM and TEM images of SCB55, together with Energy Dispersive X-ray (EDX) mapping of carbon and sulfur, confirmed that the morphology of the composite remained unchanged, during sulfur infiltration.

The obtained composite was then mixed with citric acid (CA) and PVDF, and the resulting mixture was coated onto on an aluminium (Al) foil.

The materials employed in this example represent inexpensive, naturally abundant, easily disposable materials suitable for cost-effective mass production of the present invention.

### Example 2: Preparation of an electrochemical cell according to the invention

Coin-type 2032 cells were assembled using Li metal as the anode electrode, GF/C grade glass fiber (GF) as membrane separator and the cathode of Example 1 as cathode. A 1 M LiTFSI / 0.2 M LiNO₃ solution in a 1:1 (v/v) mixture of DOL and DME was used as electrolyte. All coin-cell fabrications were performed inside a glove box filled with high-purity argon (99.999%) where the content of oxygen (O₂) and water (H₂O) was below 1 ppm.

### Example 3: Electrochemical tests

All potentials presented are vs. Li/Li⁺ and the specific capacity measurements are within 5% error limit. All the electrochemical tests were performed at room temperature (□ 25 °C).

### Cyclic voltammetry

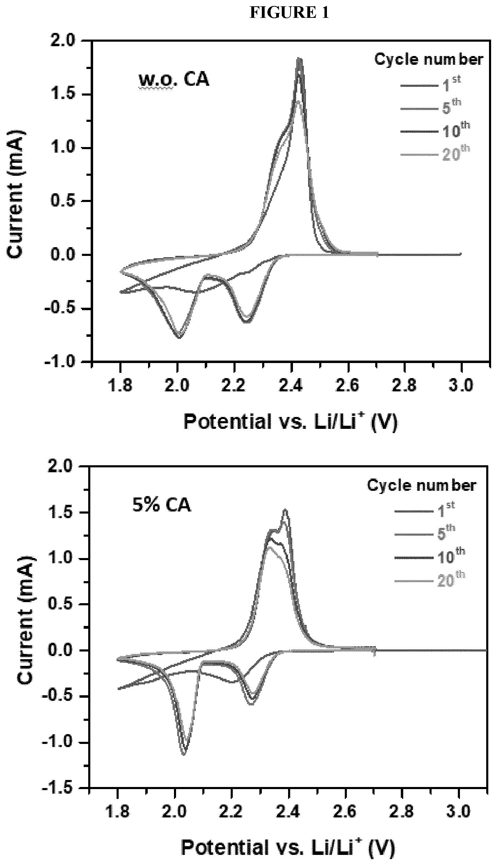

Battery fabrication with the cathode of Example 1 led to stable OCVs as high as 3.8 V, which were far from the common 3.0 V of a typical Li-S battery. Cyclic voltammetry (CV) curves of sulfur cathodes, with and without CA, were recorded in order to study the kinetics of sulfur's redox processes (Figure 1). Both sulfur cathodes exhibited typical cathodic peaks at around 2.2 V and 2.0 V, due to the conversion of sulfur to long-chain and short-chain LiPSs respectively, Anodic peaks at around 2.3 V and 2.4 V correspond to the reversible transformation of LiPSs to sulfur. It is worth noting that no peak shifting was observed upon cycling, evincing that the chemistry was stable in both CA-free and CA-added cells. Additionally, the presence of CA in the electrode not only led to lower onset potentials, in both reduction and oxidation processes, but also to sharper redox peaks, suggesting that CA accelerated and improved the reaction kinectics. At the same time, the CA-added electrode showed an additional cathodic peak at around 3.6 V on the first cathodic sweep, with no signs of its correspondent oxidation peak. Interestingly, no further reduction peaks could be observed in the following cycles, meaning that the electrochemical reduction of CA completed during the first cathodic process.

### Galvanostatic cycling

Neware BTS-4000 multi-channel battery tester system was used to test coin-type cells in the galvanostatic mode.

The absence of lithium containing electrolyte was proven ineffective leading to an endless first-charging step due to a severe shuttle effect. Therefore, LiNO₃ was required as electrolyte component, not just for the adequate cycling of the reference cells but, especially, for promoting the electrochemical reduction of CA in the CA-based cells.

Sulfur cathodes according to Example 1 were prepared using different CA loadings (2%, 5% and 10%) with respect to total weight of cathode and were tested and compared to a CA-free reference cathode.

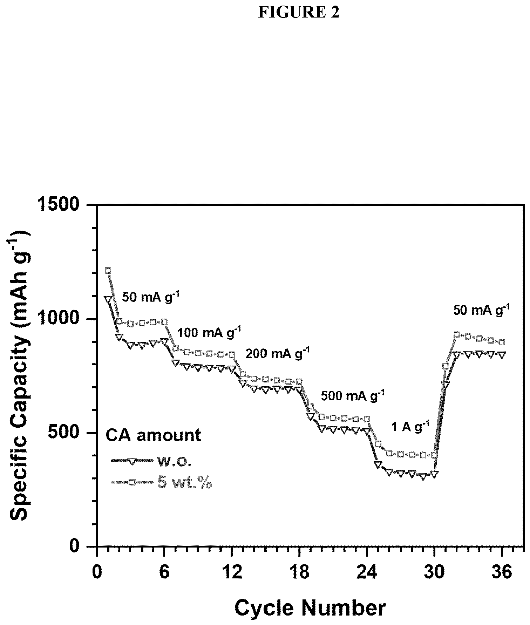

As shown in Figure 2, when compared to a cathode without CA, CA5% performance was well improved throughout all tested current densities. It was also confirmed that CA2% and CA10% cathodes provided improvement over no CA. In particular, CA2% cathode provided improved capacity at almost every current density; and CA10% provided superior performance when working at higher current density. For instance, at 1 A g⁻¹, all CA cathodes outperformed the cathode with no CA.

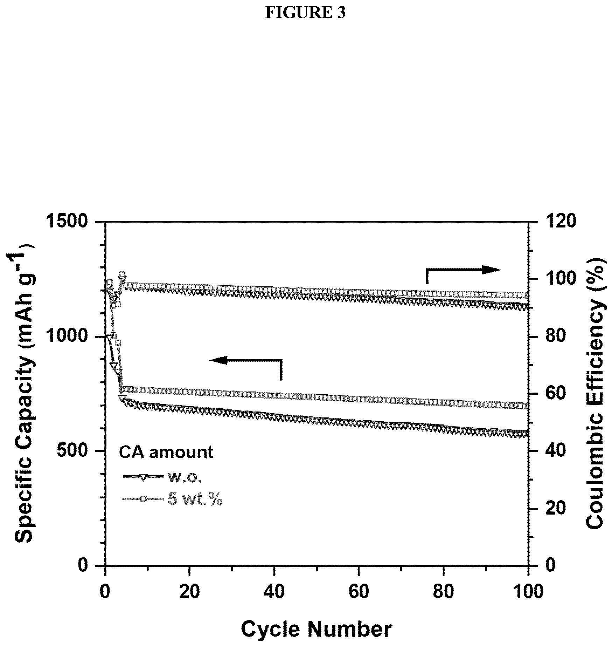

As the cathode comprising 5% CA provided the best performance, it was chosen for further study. Long-term cycling stability tests were carried out to test the effect of CA over capacity retention at a rate of 200 mA g⁻¹ with a preliminary discharge-charge stage of one cycle at 20 mA g⁻¹ to promote a better SEI formation for longer stability upon prolonged cycling. As shown in Figure 3, the CA-5% modified electrode was able to retain around an 80% of its specific capacity after 200 cycles with a coulombic efficiency close to 95%, while the cathode without CA was only able to retain about 60% of its specific capacity with a considerably poor below 90% coulombic efficiency.

### Electrical impedance spectroscopy (EIS)

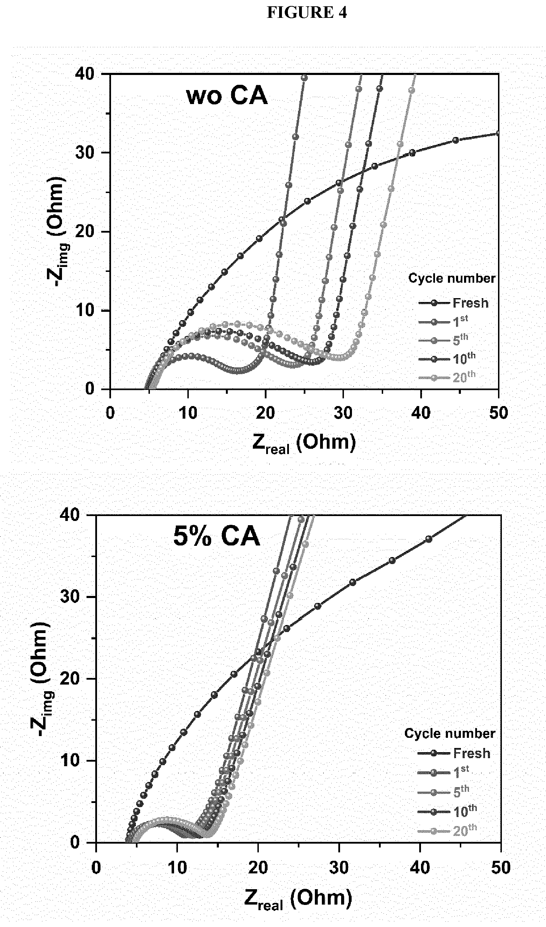

EIS measurements were performed in order to study how the cathode of the invention was affecting the Ohmic resistance of the battery. Any SEI interference was eliminated by performing potentiostatic EIS measurements at open circuit voltage (OCV) in the frequency range of 1 MHz to 10 mHz. As shown in Figure 4, EIS changes of Li-S batteries containing CA-free and 5 wt.% CA-modified cathodes were recorded. Nyquist plots revealed that the presence of CA in the cathode increased the initial resistance of the cell (256 Ω) in comparison to the CA-free electrode (108 Ω). Nevertheless, *in-situ* formation of a lithium citrate-based SEI layer at the cathode surface during first cycle drastically reduced the resistance, reaching even lower values when compared with the CA-free reference electrode. Furthermore, although it is known that SEI growth and thickening increases the cell's internal resistance, as it was observed in the test performed on the CA-free electrode, the presence of CA was key to keep the impedance constant during cycling.

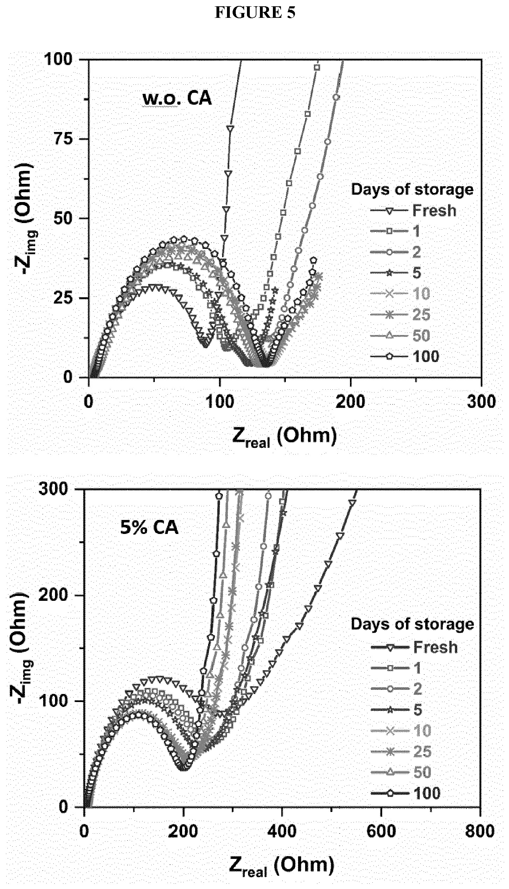

EIS measurements were also performed using pristine batteries for 100 days of storage at room temperature. As shown in Figure 5, Nyquist plots revealed that the interaction between CA and LiNO₃ (Li-citrate formation) reduced the cell resistance to □25% after the first 10 days of storage, whereas the CA-free cell experienced an increase of □55% in the same period. Furthermore, long-term cycling of the CA-free cell led to a progressive increase in resistance, whereas resistance surprisingly decreased in the CA5% cell.

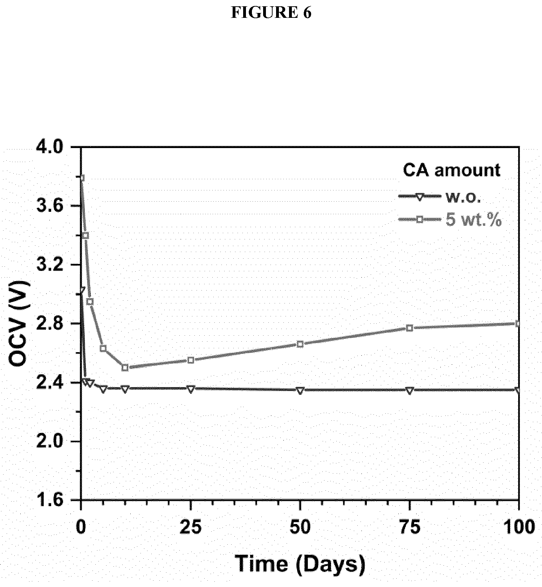

Additionally, open circuit voltage (OCV) changes for 100 days of storage at room temperature were recorded (Figure 6). During the first 10 days of storage, self-discharge of Li-S batteries led to a voltage drop to □2.4 V (2.5 V in the case of the 5 wt.% CA-loaded cell). After that period, interaction between CA and LiNO₃ started to dominate the cell chemistry and increase the cell's OCV up to 2.80 V. OCV remained the same even after 100 days storage. Prevention of self discharge in the case of Li-S batteries made of CA containing sulfur cathode can be attributed to the formation of a Li-carboxylate based SEI on the cathode by in-situ reaction with LiNO₃ present in the electrolyte solution. This SEI inhibits reduction reaction of sulfur during Li-S battery storage, and causes stable OCV.

### Example 4: Chemical characterization of the SEI formed on cathodes of the invention

Structural alterations at cathode surface upon cycling (20 cycles at 20 mA g_{CA}⁻¹) of the CA5% cathode of Example 3 were investigated. Although the amount of CA was considerably low, optical analysis of cycled CA-loaded electrodes evinced a faint white SEI coating on the electrode's surface. To examine the chemical nature of the *in-situ* SEI formed at the top of the cathode's surface, post-morten analyses were performed through FT-IR and XPS techniques, which provided complementary information considering that the depth of penetration of ATR FT-IR is higher when compared with XPS's depth. Both studies were focused on the detection and characterization of the signals associated to -COOH and -COOLi, which were the differentiating parts of each compound since they share most of their organic chemical structure. In order to maximize the effect for better signal acquisition, CA-based electrodes (30 wt.% carbon black, 50 wt.% CA, 20 wt.% PVDF) were cycled by using a 1M LiTFSI / 0.2M LiNO₃ solution in a 1:1 (v/v) mixture of DOL and DME.

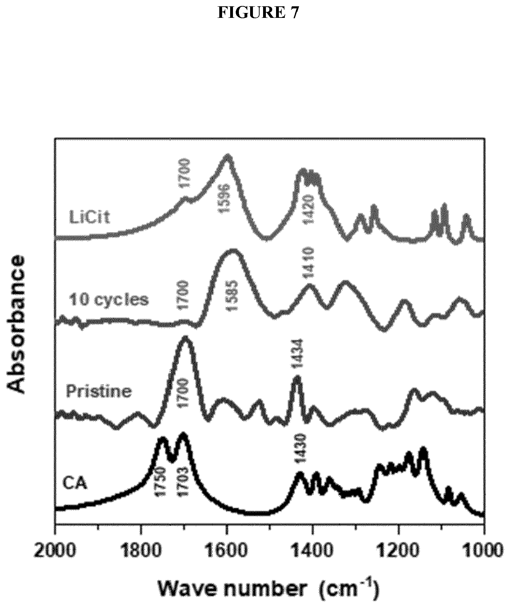

FTIR spectra of the electrodes in the range of 2000 - 1000 cm⁻¹ where the typical signals of carboxylic (-COOH) and lithium carboxylate (-COOLi) groups fall are recorded to investigae the reaction mechanism. Electrode containing citric acid showed peaks at 1750 and 1700 cm⁻¹ (antisymmetric) and 1430 cm⁻¹ (symmetric), associated to the -COOH stretching mode, which is consistent with the reference peaks of citric acid. During galvanostatic discharge, citric acid reacts with LiNO₃ (*in situ* electrochemical reaction), resulting in an SEI containing Li-citrate. Replacement of the proton in - COOH by lithium cation (formation of -COOLi) resulted in the peak shifting to around 1705 and 1585 cm⁻¹ (antisymmetric) and 1415 cm⁻¹ (symmetric) respectively (Figure 7). Formation of Li-citrate based SEI is also confirmed by XPS studies. High resolution C Is and O 2p XPs spectra are presented in Figure 8. Both C Is and the O 1s spectrum are shifted to lower binding energies due to Li-citrate formation during the initial discharge process: from 289.0 eV to 288.5 eV in the case of C Is spectrum, and from 532.4 to 531.6 eV in the case of the O 1s spectrum. Post-cycling analysis of the CA5% electrode also revealed such effect in comparison to citric acid reference signals, confirming citric acid to Li-citrate transformation.

## Claims

1. Cathode for lithium-sulfur electrochemical cell, wherein the cathode comprises a carboxylic acid at the surface of the cathode.

2. Cathode according to claim 1, wherein the carboxylic acid is citric acid, oxalic acid, ethylenediamine tetraacetic acid, polyacrylic acid, terephthalic acid or ascorbic acid.

3. Cathode according to claim 1, wherein the carboxylic acid is citric acid.

4. Cathode for lithium-sulfur electrochemical cell, wherein the cathode comprises a lithium carboxylate at the surface of the cathode.

5. Cathode according to any one of the preceding claims, wherein the cathode comprises elemental sulfur as active material sulfur species.

6. Cathode according to any one of the preceding claims, wherein the cathode comprises a filler selected from carbon materials, metal oxides, metal sulphides, metal nitrides, metal carbides, metal phosphides, polymers, or combinations thereof.

7. Cathode according to claim 6, wherein the filler is carbon black.

8. Cathode according to any one of the preceding claims, wherein the cathode comprises a binder.

9. Method for manufacturing a cathode as defined in any one of claims 1 to 8, comprising the steps of:
a) mixing a sulfur species suitable as lithium-sulfur electrochemical cell cathode active material, and a carboxylic acid and/or lithium carboxylate, and optionally a filler, and optionally a binder, and optionally a solvent, to obtain a mixture;
b) if solvent is employed in step a), evaporating the solvent, and optionally drying the evaporated mixture,
c) Optionally, lithiating at least part of the carboxylic acid at the surface of the mixture or evaporated mixture.

10. Method according to claim 9, wherein step c) is carried out by bringing the mixture or evaporated mixture into contact with a lithium salt.

11. Method according to claim 10, wherein step c) then comprises applying current to the cathode.

12. Lithium-sulfur electrochemical cell comprising a cathode as defined in any one of claims 1 to 8.

13. Lithium-sulfur battery comprising an electrochemical cell as defined in claim 12, or a cathode as defined in any one of claims 1 to 8.

14. A vehicle, an electronic device or an electrical grid comprising: a battery as defined in claim 13, or an electrochemical cell as defined in claim 12, or a cathode as defined in any one of claims 1 to 8.

15. Use of a battery as defined in claim 13, or of an electrochemical cell as defined in claim 12, or of a cathode as defined in any one of claims 1 to 8 for storing energy.
